(19) Europäisches Patentamt

European Patent Office

Office européen des brevets

(11) Veröffentlichungsnummer: **0 391 397 B1**

(12) **EUROPÄISCHE PATENTSCHRIFT**

(45) Veröffentlichungstag der Patentschrift: **20.07.94**

(51) Int. Cl.⁵: **F15B** 13/00, G09B 23/12

(21) Anmeldenummer: **90106483.2**

(22) Anmeldetag: **05.04.90**

(54) **Einführungshydraulik.**

(30) Priorität: **05.04.89 DE 3910954**

(43) Veröffentlichungstag der Anmeldung:
**10.10.90 Patentblatt 90/41**

(45) Bekanntmachung des Hinweises auf die
Patenterteilung:
**20.07.94 Patentblatt 94/29**

(84) Benannte Vertragsstaaten:
**AT BE CH DE DK ES FR GB GR IT LI LU NL SE**

(56) Entgegenhaltungen:
DE-A- 2 319 679
DE-A- 3 242 563
NL-A- 6 713 238
US-A- 3 363 340
US-A- 3 382 593

UND-ODER-NOR + STEUERUNGSTECHNICK,
Nr. 10, 1976, Seiten 77-80; J. ERICH-
SEN:"Hydraulik als Schulungsaufgabe"

UND-ODER-NOR + STEUERUNGSTECHIK, Nr.
10, 1976, Seiten 82,83; "Informationenüber
Lehr- und Übungsaggregate für die Hydraulik"

TECHNISCHE RUNDSCHAU, Band 69, Nr. 9,
1977, Seiten 10,11; "Schulungssysteme der-
Fluidtechnik"

(73) Patentinhaber: **Leverberg, Siegfried**
**Bremenkampstrasse 77**
**D-46147 Oberhausen(DE)**

(72) Erfinder: **Leverberg, Siegfried**
**Bremenkampstrasse 77**
**D-46147 Oberhausen(DE)**

(74) Vertreter: **Linser, Heinz et al**
**Patentanwälte Heinz Linser**
**Dipl. Ing. Eckhardt Eyer**
**Postfach 10 22 10**
**D-63268 Dreieich (DE)**

## Beschreibung

Die Erfindung betrifft ein Baukasten-Hydrauliksystem für Unterrichts- und Experimentierzwecke, bestehend aus einer Vielzahl Hydraulikelemente unterschiedlicher Funktionen, welche in Form von Klarsichtgeräten als Hydraulikventil und/oder elektrohydraulisches Gerät oder Meßgerät und/oder Filter ausgebildet sind und zur veranschaulichung ihrer jeweils eigenen meßtechnisch erfaßbaren gerätetypischen Verhaltensweise und ihres Zusammenwirkens in einer hydraulischen Schaltung auf einer Gerätewand montierbar sind. Ein derartiges System ist aus der Zeitschrift UND-ODER-NOR, Nr. 10, 1976, Seiten 77-80, J. Erichsen: "Hydraulikals Schulungsaufgabe", bekannt.

Die Hydraulik-Technik gewinnt im Bereich des gesamten Maschinenbaus eine immer größer werdende Bedeutung. Aus diesem Grund werden an die Aus- und Weiterbildung in diesem Bereich erhöhte Anforderungen gestellt. Das wird auch deutlich bei der neuen Ausbildungsordnung für die Metall- und Elektroberufe. Die darin festgelegten Ausbildungsinhalte berücksichtigen als einen der Schwerpunkte die Steuerungstechnik. Damit ist die Fluidtechnik, nämlich die Pneumatik und Hydraulik ein wesentlicher Bestandteil der Fachausbildung geworden. Hierbei ist es für eine effiziente Ausbildung notwendig, neben dem Lehrmaterial für die theoretischen Grundlagen auch lernstofforientierte Übungs- und Demonstrations-Anlagen zur Verfügung zu haben, welche derartig ausgebildet sind, daß in kurzer Zeit ein anschauliches Verständnis der gesamten Thematik erreicht wird.

Eine gute Ausbildung umfaßt daher nicht nur partiell herausgegriffene Abschnitte aus dem gesamten Stoff, sondern sie muß weitgehend alles vermitteln, was später in der Praxis gefordert wird.

Von besonderer Bedeutung ist hierbei der nahtlose Übergang zu den verschiedenen Themen. So ist die Kenntnis und damit die Veranschaulichung der Funktion der hydraulischen Geräte und insbesondere der Ventile, eine wichtige Voraussetzung für die Erstellung eines Hydraulikschaltplans, denn nur derjenige, der die Funktion und Wirkungsweise beispielsweise der Hydraulikventile beherrscht, kann einen entsprechenden Schaltplan zur Lösung eines Hydraulikproblems entwerfen. Hier schließt sich unmittelbar die folgende Stufe an, nämlich die Umsetzung des Schaltplans in eine Montage. Aber erst das praktische Zusammenspiel aller Hydraulikelemente, d.h. die Veranschaulichung der Funktion der Schaltung im Zusammenwirken der Ventile und Elemente ergibt das vollständige Bild und damit das vollkommene Verständnis für die gesamte Thematik.

Der Erfindung liegt die Erkenntnis zugrunde, daß ein solches pädagogisches Ziel am sinnvollsten nur dann erreicht werden kann, wenn der Lernende zur Erklärung der ersten Stufe, nämlich der Funktion der Hydraulikventile solche Modelle in die Hand bekommt, welche alle Funktionen sichtbar und im wörtlichen Sinne begreifbar machen, darüberhinaus aber auch Einblick in das Innere solcher Elemente während der Funktion erlaubt. Von besonderer Bedeutung ist es aber, wenn solche Modelle oder funktionsgleiche Muster oder Modelle den Lernenden durch alle oben genannten Stufen begleiten können. Wenn somit beispielsweise die Modelle nach einem Schaltplan direkt als Trockenmodelle in einer simulierten Montage eingesetzt werden können, wobei die Leitungsverbindungen durch Haftstreifen oder Farbstriche an einer entsprechenden Schultafel erzeugt werden und wenn danach die funktionsgleichen Modelle als "Naßmodelle" an einer "Naßtafel" funktionsgerecht eingesetzt werden können.

Hydraulikelemente, welche den einzelnen Zwecken dienen, sind an sich bereits bekannt. So gehen aus der Zeitschrift UND-ODER-NOR + STEUERUNGSTECHNIK, Nr. 10, 1976, Seiten 77-80; J. Erichsen: "Hydraulik als Schulungsaufgabe", Geräte hervor, welche denjenigen entsprechen, die in der Hydrauliktechnik eingesetzt werden und die der laufenden Produktion entnommen sind. Hierbei ist lediglich die äußere Verkleidung der Geräte durch eine durchsichtige Ummantelung ersetzt, so daß der Schüler zwar die einzelnen Elemente erkennen kann, jedoch nicht ihre physikalischen Grundfunktionen oder Prinzipien, nach denen die Elemente in dem Gerät arbeiten. Außerdem enthalten alle Geräte aus der Praxis noch integrierte Elemente für nebengeordnete Funktionen, welche die Grundfunktionen überlagern oder verdecken, so daß sich diese einem Anfänger nur sehr schwer veranschaulichen lassen.

Darüberhinaus sind die nach dem Stand der Technik verwendeten Geräte firmenspezifisch ausgebildet, wodurch für den Schüler weitere Schwierigkeiten und Verwirrungen hinzukommen.

Diese bekannten Unterrichtsmittel weisen aber noch weitere erhebliche Nachteile auf. Durch die Verwendung der in einem Kunststoffglas eingelagerten Originalteile eines Hydraulikgerätes entsprechen die Elemente auch den in der Praxis verwendeten Größen und Nennweiten (Nenngröße 4 mm oder 6 mm). Eine Darstellung vor einem größeren Schülerkreis ist dadurch nur mit Hilfe eines Overhead-Projektors möglich.

Hinzu kommt aber, daß die Originalteile beim Stand der Technik aus Eisen bestehen, so daß auch das in der Praxis verwendete gleiche Mittel, nämlich Öl, eingesetzt werden muß, um eine Oxidation der Elemente zu vermeiden. Da an der Tafel aus Experimentiergründen die Verbindungen der Elemente häufiger als in der Praxis geändert und neu zusammengesteckt werden müssen, lassen sich Leckagen nicht vermeiden. Für einen Unterrichtsraum sind jedoch derartige Verhältnisse nicht tragbar.

Der Erfindung liegt daher die Aufgabe zugrunde, ein Baukasten-Hydrauliksystem für Unterrichts- und Experimentierzwecke zur Verfügung zu stellen, mit dessen Hilfe die Wirkungsweise und die physikalische und interne Grundfunktion eines jeden Hydraulikelements dem Schüler in einfacher und praktischer Weise vermittelt wird. Es sollen funktionsgerechte Modelle sowohl als Trockenmodelle am Tisch, an der (trockenen) Schultafel, zur Veranschaulichung von Schaltungen und danach an der (nassen) Gerätewand zur Veranschaulichung des Zusammenwirkens aller Ventile und Elemente einer Schaltung eingesetzt werden können, wobei in allen dargestellten Phasen und zwar auch während der Naßfunktion die Anschaulichkeit besonders erhalten bleibt.

Die Lösung dieser Aufgabe besteht nach der Erfindung darin, daß jedes Hydraulikventil und/oder elektrohydraulische Gerät oder Meßgerät und/oder Filter ein durchsichtiges Rohr aus Kunststoff eines im Vergleich zur gleichartigen Hydraulik größeren Durchmessers aufweist, in dem die jeweiligen Ventilbauelemente, welche ebenfalls aus Kunststoff oder nichtrostendem Metall bestehen, funktionsfähig angeordnet sind, wobei Endstücke das Rohr abschließen und Bohrungen in der Wandung des Rohres für die Ventileingänge und Ventilausgänge an funktionsgerechten Orten des Rohres vorhanden sind.

Zur besseren Sichtbarmachung des jeweiligen Ventils, aber auch zur einfacheren Befestigung sowohl an der Trocken- oder Schultafel als auch an der Naßtafel oder der Gerätewand und zum leichten Aufstellen auf dem Tisch, ist das durchsichtige Außenrohr eines Hydraulikgerätes vorteilhaft mit einer lichtreflektierenden ebenen Fläche befestigt, welche ihrerseits Mittel zur Befestigung der Fläche an der Gerätewand aufweist, wobei Bohrungen vorhanden sind, welche mit den Bohrungen in dem Rohr und der Gerätewand für die Ventileingänge und Ventilausgänge räumlich übereinstimmen.

Unter Trockentafel wird dabei eine Schultafel verstanden, bei der die mit Haftelementen befestigten Ventile nicht mit einer Hydraulikflüssigkeit beaufschlagt werden, während dies bei einer sogenannten Naßtafel oder Gerätewand der Fall ist.

An der Naßtafel sind die Leitungsverbindungen der Ventile mittels Steckverbindungen und durchsichtigen Schläuchen hergestellt.

Um die Funktionsabläufe deutlich sichtbar zu gestalten wird als Hydraulikmittel präpariertes und gefärbtes Wasser verwendet. Dieser Vorteil ergibt sich besonders dadurch, daß keine rostenden Teile, sondern nur Kunststoffe und nichtrostende Metalle in den Ventilen verwendet werden. Die bei derartigen Modellen zum Teil auch bewußt auftretenden internen Undichtigkeiten sind dabei nicht schädlich, sondern gehören zum Lehrprogramm. Die bei der Schlauchmontage austretende Leckageflüssigkeit wird durch eine Wanne aufgefangen, welche unter der Gerätewand angeordnet ist, so daß diese Wand in allen Räumen aufgestellt und verwendet werden kann.

In vorteilhafter Weiterbildung der Erfindung weist das Endstück eines Hydraulikventils oder Hydraulikzylinders in Achsrichtung des Außenrohres eine Bohrung zur Durchführung einer von Hand betätigbaren Stange auf, welche gegenüber dem Rohrinnern mit Dichtungen versehen ist. Das Ventil kann damit sowohl im Trockenzustand als auch unter realistischen Naßbedingungen von Hand betätigt werden, so daß die Ventilfunktionen in allen Phasen studiert und demonstriert werden können. Wird das Ventil ausschließlich im Trockenzustand verwendet, können die Dichtungen natürlich entfallen.

Ein als Rückschlagventil ausgebildetes Sperrventil ist vorteilhaft zwischen den Endstücken des Außenrohres ausgebildet und weist einen aus Kunststoff bestehenden Dichtkegel auf, der mittels einer Druckfeder gegen ein im Rohr befindliches durchsichtiges, als Ventilsitz wirkendes Einsatzrohr preßt.

In Weiterbildung der Erfindung ist ein als Drosselventil ausgestaltetes Mengenventil zwischen den Endstücken des Außenrohres ausgebildet und weist einen aus Kunststoff bestehenden Dichtkegel auf, der mittels einer von Hand betätigbaren Verstellspindel axial beweglich ist und im Schließzustand gegen ein im Rohr befindliches durchsichtiges, als Ventilsitz wirkendes Einsatzrohr preßt.

In ähnlicher Weise lassen sich alle Ventile und Hydraulikgeräte sowie Hydraulik-Meßgeräte vorteilhaft nach den Grundprinzipien der Erfindung aufbauen. So ist ein als Druckbegrenzungsventil ausgestaltetes Druckventil zwischen den Endstücken des Außenrohres ausgebildet und weist einen aus Kunststoff bestehenden Dichtkegel auf, der mittels einer Druckfeder gegen ein im Rohr befindliches durchsichtiges, als Ventilsitz wirkendes Einsatzrohr preßt, wobei zwischen der Druckfeder und dem Endstück ein von Hand mittels einer Verstellspindel betätigbarer Federteller angeordnet ist.

Ferner ist nach der Erfindung ein als 4/3-Wegeventil ausgebildetes Wegeventil zwischen den Endstücken des Außenrohres ausgebildet und weist eine durch das eine Endstück geführte von Hand betätigbare Schubstange auf, welche auf Steuerschieber, die entsprechenden Bohrungen in dem Rohr zugeordnet sind, einwirkbar ausgebildet ist.

3

Ein als Volumenstrom-Meßgerät ausgebildetes Hydraulikgerät ist ferner zwischen den Endstücken des Außenrohres ausgebildet und weist einen zwischen zwei Druckfedern gelagerten Kolben mit einer Drosselstrecke auf.

Weitere vorteilhafte Ausbildungen von Hydraulikgeräten sind in den weiteren Unteransprüchen beschrieben.

Die vertikal angeordnete Gerätewand ist mit einem Hydrauliktank in einer Auffangschale angeordnet, wobei die Platte zur Aufnahme der Hydraulikventile auf einer Seite und der Anordnung der Leitungsverbindungen auf der anderen Plattenseite Befestigungsmittel und zur Durchführung der Ventilausgänge und Ventileingänge Durchbohrungen aufweist.

Die Erfindung wird anhand der Zeichnungen, in denen die Gerätewand und Beispiele von Hydraulikgeräten dargestellt sind, näher erläutert. Hierbei zeigen:

FIGUR 1     die schematische Darstellung einer fahrbaren Gerätewand in Frontansicht;

FIGUR 2     die schematische Darstellung einer fahrbaren Gerätewand nach Figur 1 in Seitenansicht;

FIGUR 3     schematische Darstellung eines Druckbegrenzungsventils aus der Gruppe der Druckventile, im Längsschnitt;

FIGURE 4     schematische Darstellung eines Drosselventils aus der Gruppe der Mengenventile im Längsschnitt;

FIGUR 5     schematische Darstellung eines Rückschlagventils aus der Gruppe der Sperrventile im Längsschnitt;

FIGUR 6     schematische Darstellung eines 4/3 Wegeventils aus der Gruppe der Wegeventile im Längsschnitt.

FIGUR 7     schematische Darstellung eines Volumenstrom-Meßgerätes im Längsschnitt;

FIGUR 8     schematische Darstellung eines Druck-Meßgerätes im Längsschnitt;

FIGUR 9     schematische Darstellung eines elektrohydraulischen Druckschalters im Längsschnitt, und

FIGUR 10     schematische Darstellung eines hydraulischen Filters im Längsschnitt;

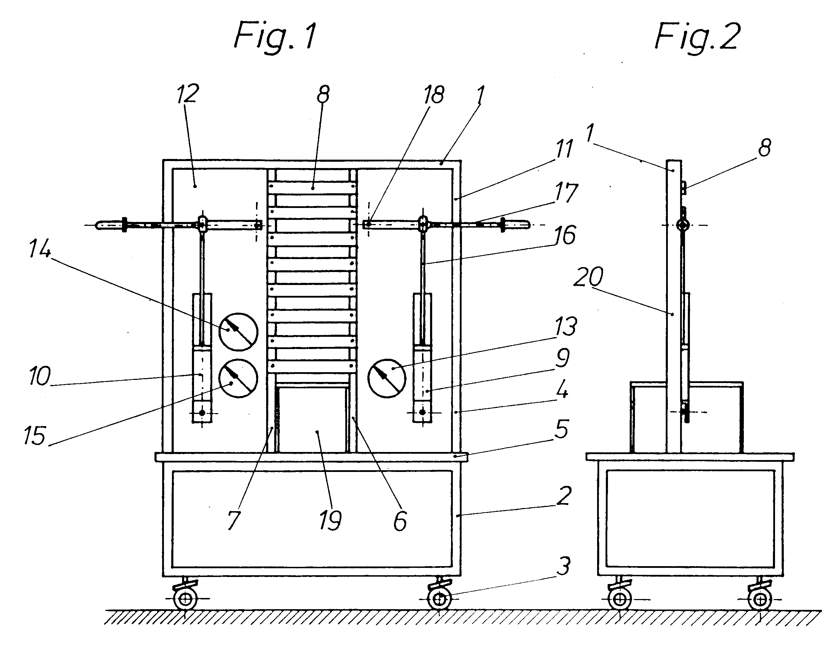

Die Figuren 1 und 2 zeigen eine fahrbare Gerätewand 1, welche im unteren Teil einen Schrank 2 mit feststellbaren Rädern 3 aufweist. Das Gerätegestell 4 steht in einer Wanne 5, welche zum Auffangen der bei der Montage entstehenden Leckageflüssigkeit dient. Innerhalb des Gerätegestells 4 befinden sich in einem definierten Abstand zwei Stützen 6 und 7 zwischen denen im gleichen Abstand untereinander Leisten 8 angeordnet sind. Zwischen jeder Stütze 6 bzw. 7 und dem Gerätegestell 4 ist jeweils eine Wandfläche 11 und 12 eingebaut, an der je ein Hydraulikzylinder 9 und 10 befestigt ist. Ferner befinden sich noch Manometer 13, 14 und 15 oder andere Meßinstrumente an der Wandfläche 11 bzw. 12. Zwischen den Leisten 8 werden die Hydraulikgeräte befestigt, welche später beschrieben werden und von denen jedes mit einer gleichgroßen lichtreflektierenden Fläche befestigt ist, welches dem Abstand der Leisten 8 entspricht.

Die Hydraulikzylinder 9 und 10 sind in dem hier vorliegenden Beispiel gleich groß ausgebildet. Es können natürlich auch aus pädagogischen Gründen unterschiedlich große Hydraulikzylinder eingesetzt werden. Die Zylinderkolben sind mit einer Zylinderstange 16 verbunden, welche ihrerseits mit einem Handhebel 17 betätigbar ist, der an einem Gelenkdrehpunkt 18 drehbar befestigt ist. Ein Flüssigkeitstank 19 ist für den Betrieb der Hydraulikanlage mit präpariertem und gefärbtem Wasser gefüllt.

Die Hydraulikventile, welche nach einem bestimmten durchzunehmenden Schaltplan zusammengestellt und auf der Gerätetafel 1 montiert werden, werden miteinander nach diesem Schaltplan mittels Steckkupplungen fluidisch verbunden, wobei die Schläuche und Schlauchverbindungen aus der Rückseite 20 der Gerätetafel 1 befestigt werden.

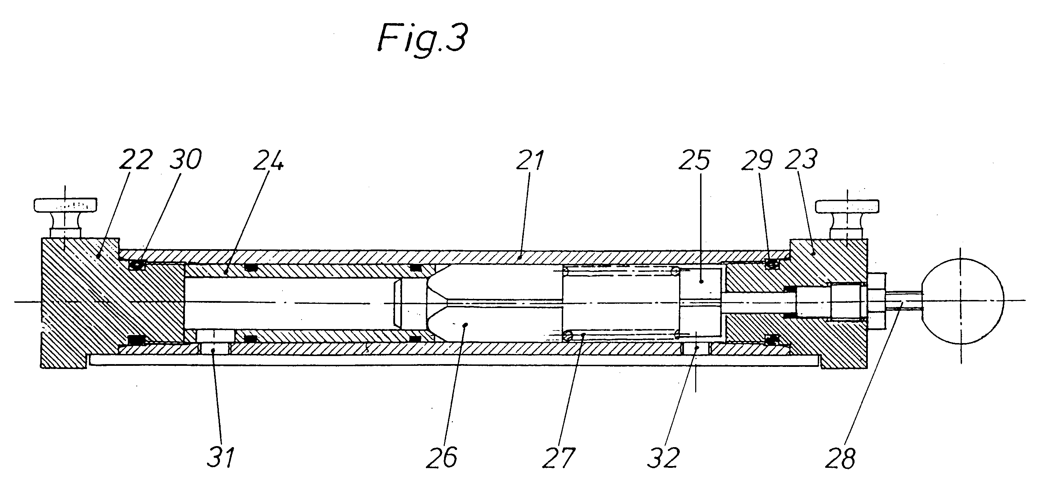

Die Figur 3 zeigt aus der Baugruppe der Druckventile als Anwendungsbeispiel der Erfindung ein Druckbegrenzungsventil mit folgendem Aufbau. Ein handelsübliches Rohr aus durchsichtigem Kunststoff ist als Außenrohr 21 zwischen den Endstücken 22 und 23 eingespannt und mit Dichtungen 29 und 30 versehen. In dem Endstück 23 ist eine Verstellspindel 28 durch eine Bohrung geführt und mit einem Federdruckstück 25 verbunden, welches auf eine Druckfeder 27 an einem Ende einwirkbar ist. Am anderen Ende der Druckfeder 27 ist der Dichtkegel 26 angeordnet, der auf das eine Ende des Einsatzrohres 24 preßt. Die Bohrungen 31 und 32 durch das Außenrohr 21 und Einsatzrohr 24 bilden den Ein- bzw. Auslaß des Druckbegrenzungsventils. Mit Hilfe der handbetätigbaren Verstellspindel 28 kann der Lernende die Wirkung des Dichtkegels 26 eingehend studieren und den Durchfluß beobachten, da als Fluid gefärbtes Wasser verwendet wird.

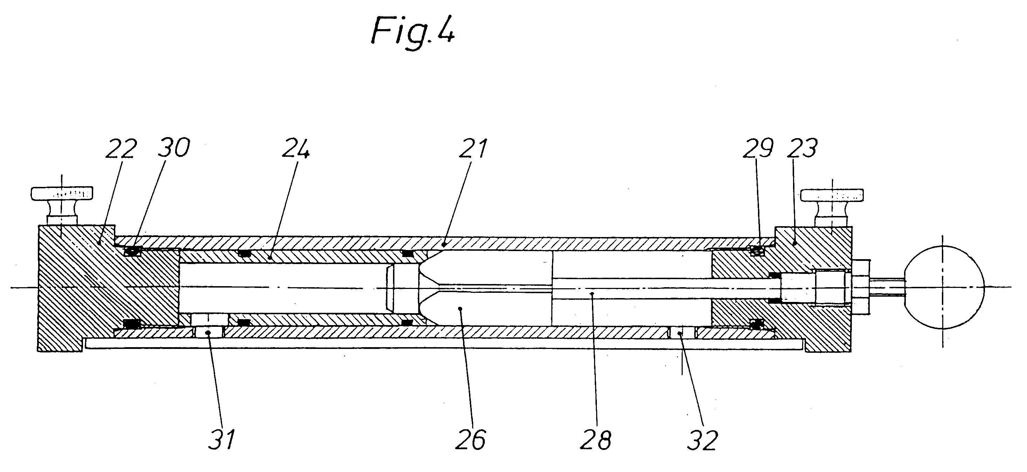

Die Figur 4 zweigt aus der Baugruppe der Mengenventile als weiteres Anwendungsbeispiel der Erfindung ein Drosselventil mit folgendem Aufbau.

Die gleichen Elemente der unterschiedlichen Ventile sind hierbei mit gleichen Bezugzeichen versehen, so daß hieraus das der Erfindung zugrundeliegende Prinzip verdeutlicht wird.

Ein handelsübliches Rohr aus durchsichtigem Kunststoff ist als Außenrohr 21 zwischen den Endstücken 22 und 23 eingespannt und mit Dichtungen 29 und 30 versehen. In dem Endstück 23 ist eine Verstellspindel 28 durch eine Bohrung geführt und mit einem Dichtkegel 26 verbunden, der auf das eine Ende des Einsatzrohres 24 preßt. Die Bohrungen 31 und 32 durch das Außenrohr 21 und Einsatzrohr 24 bilden den Ein- bzw. Auslaß des Drosselventils.

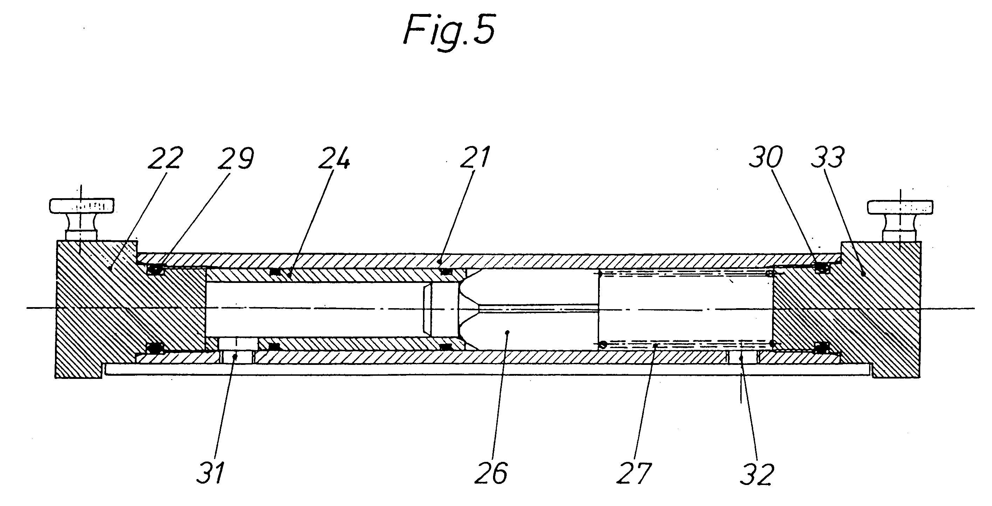

In ähnlicher Weise ist ein Rückschlagventil, hier als Beispiel für die Gruppe der Sperrventile, aufgebaut, und als ein weiteres Ausführungsbeispiel der Erfindung in Figur 5 dargestellt. Auch hierbei ist ein handelsübliches Rohr aus durchsichtigem Kunststoff als Außenrohr 21 zwischen den Endstücken 22 und 33 eingespannt und mit Dichtungen 29 und 30 versehen. Zwischen dem Endstück 33, welches mit dem Endstück 22 baugleich ist, und dem Dichtkegel 26 ist eine Druckfeder 27 angeordnet, welche den Dichtkegel 26 gegen das eine Ende des Einsatzrohres 24 preßt. Die Bohrungen 31 und 32 durch das Außenrohr 21 und Einsatzrohr 24 bilden den Ein- bzw. Auslaß des Rückschlagventils.

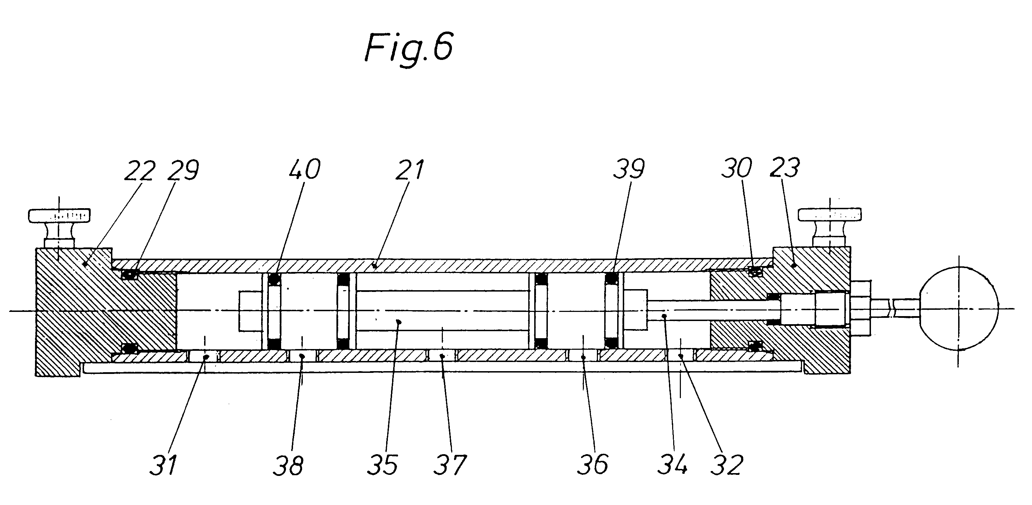

Die Figur 6 zeigt aus der Gruppe der Wegeventile ein 4/3-Wegeventil. Ein handelsübliches Rohr aus durchsichtigem Kunststoff ist als Außenrohr 21 zwischen den Endstücken 22 und 23 eingespannt und mit Dichtungen 29 und 30 versehen. In dem Endstück 23 ist eine Schubstange 28 durch eine Bohrung geführt, welche mit einem Schubkolben 39 integral verbunden ist. Ein Steuerschieber 35 im mittleren Teil des Außenrohres 21 und ein weiterer Steuerschieber 40 am anderen Ende des Wegeventils lassen sich durch die Schubstange 34 umsteuern, so daß die Bohrungen 31, 32 sowie 36, 37 und 38 sich entsprechend kommunizieren lassen, wodurch das Grundprinzip eines Wegeventils sich veranschaulichen läßt.

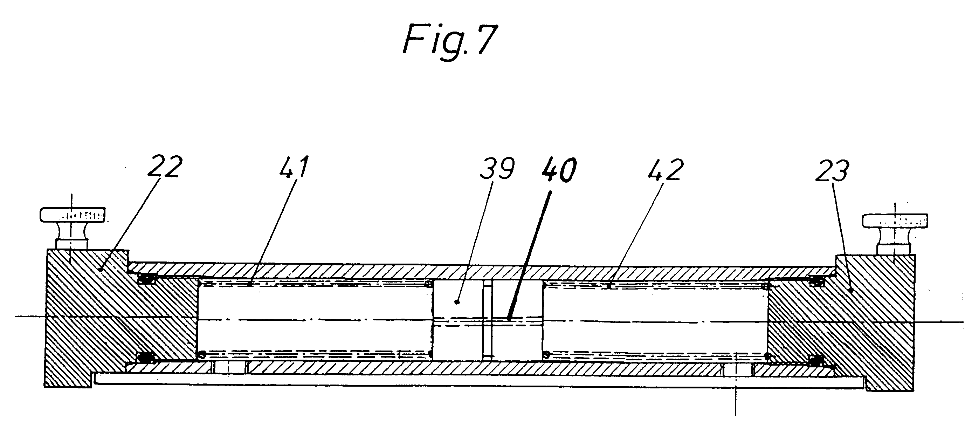

Die Figur 7 zeigt ein als Volumenstrom-Meßgerät ausgebildetes Hydraulikgerät. Zwischen den Endstücken 22 und 23 des Außenrohres 21 ist ein Kolben 39 angeordnet, der zwischen zwei Druckfedern 41 und 42 gelagert ist. Dieser Kolben 39 ist mit einer Drosselstrecke 40 ausgerüstet, durch die die Druckflüssigkeit strömt und gegen die Federkraft eine Kraft ausübt, welche dem Volumenstrom proportional ist. Der Kolben ist mit einer Markierung 43 versehen, so daß der Wert des Volumenstroms ablesbar ist.

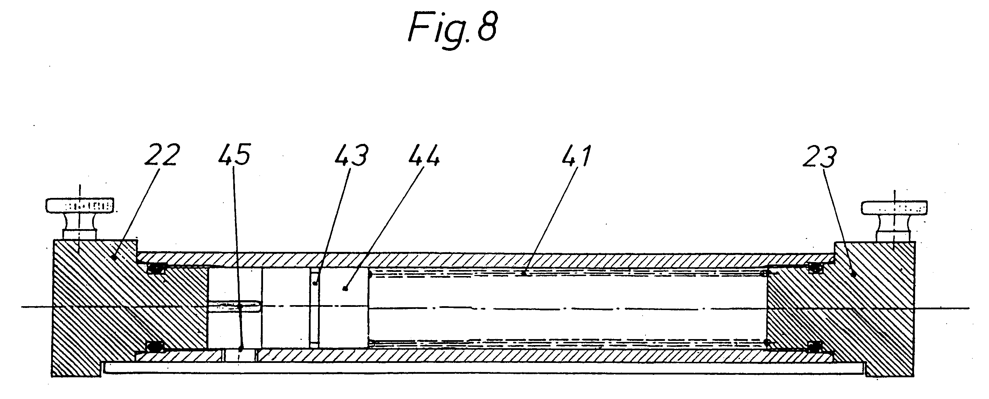

Die Figur 8 zeigt ein als Druck-Meßgerät ausgebildetes Hydraulikgerät. Zwischen den Endstücken 22 und 23 des Außenrohres 21 ist ein Kolben 44 angeordnet, welcher ebenfalls mit einer Markierung 43 ausgerüstet ist, der gegen eine Druckfeder 41 beweglich gelagert ist. Zwischen einem Endstück 22 und dem Kolben 44 ist ein Druckanschluß 45 vorgesehen, so daß der Kolben 44 gegen die Kraft der Feder 41 mit einer Druckflüssigkeit beaufschlagt werden kann, wobei die Verschiebung des Kolbens 44 dem Druck proportional ist.

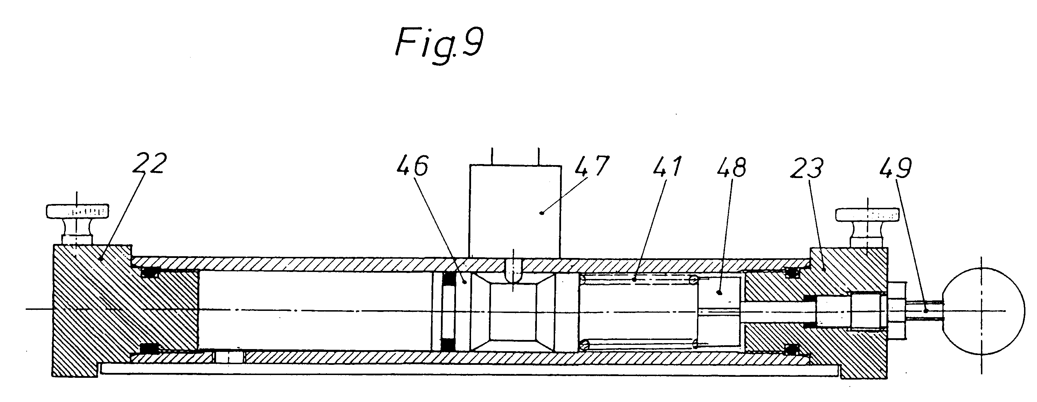

Die Figur 9 zeigt einen elektrohydraulischen Druckschalter, der zwischen den Endstücken 22 und 23 des Außenrohres 21 ausgebildet ist und einen federbetätigbaren Kolben 46 aufweist, der mit einem elektrischen Schalter 47 zusammenwirkt. Die Druckfeder 41, welche an einem Ende gegen den Kolben 47 anliegt, stößt an ihrem anderen Ende gegen einen Federteller 48, der mittels eines Handrades und einer Gewindespindel 50 verschiebbar ausgebildet ist, so daß der Schaltpunkt des elektrischen Schalters in Abhängigkeit vom Druck einstellbar ist. Sobald der Kolben 47 durch die Beaufschlagung mit Druckflüssigkeit einen definierten Weg zurückgelegt hat, betätigt er den elektrischen Schalter zur Erzeugung eines elektrischen Signals für Steuerzwecke.

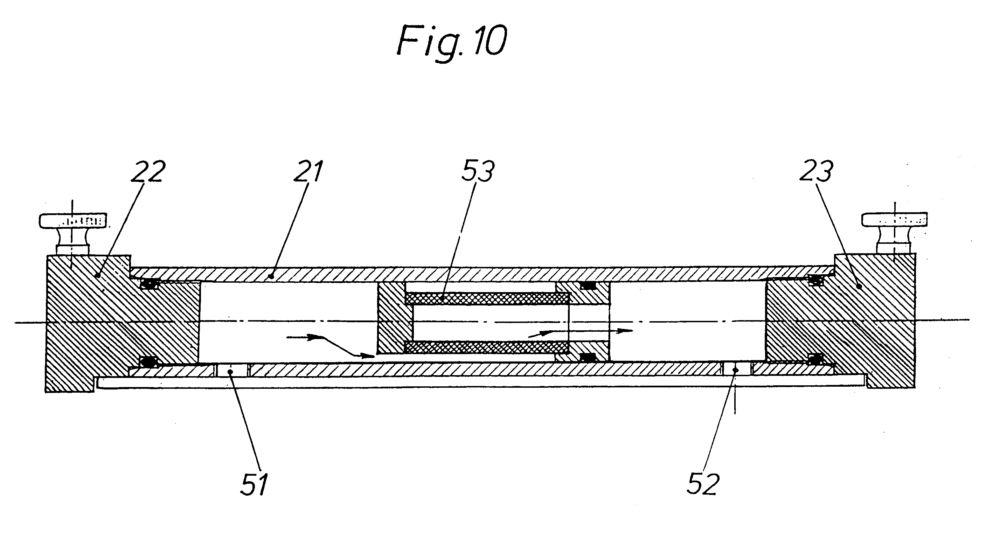

Die Figur 10 zeigt ein als Hydraulikfilter ausgebildetes Hydraulikgerät, welches zwischen den Endstücken 22 und 23 des Außenrohres 21 ausgebildet ist und zwischen der Eingangs- und Ausgangsöffnung 51 bzw. 52 ein Filtergewebe 53 aufweist. Die Druckflüssigkeit strömt durch die Eingangsöffnung 51 und gelangt durch das Filtergewebe 53, wodurch in der Flüssigkeit vorhandener Schmutz zurückgehalten wird.

Den dargestellten Geräten liegen die gleichen Prinzipien zugrunde und es lassen sich elektrohydraulische Geräte, wie beispielsweise magnetisch betätigbare Wegeventile oder Druckschalter aufbauen.

Die für die Einführung vorgeschlagene Hydraulik ist eine reine Experimentier-Hydraulik, mit der man aber gerade deswegen in der Lage ist, die Grundbegriffe der Hydraulik-Technik auf leicht begreifliche Weise darzustellen.

Ganz bewußt wird so der Kompromiß vermieden, den man bei Ausführung und Druckbelastung der Hydraulik-Geräte eingehen muß, wenn physikalische und hydrauliktechnische Grundbegriffe erläutert werden sollen und gleichzeitig der Anspruch erhoben wird, praxisgerecht zu sein. Die in der Praxis eingesetzten Geräte unterliegen völlig anderen Bedingungen, welche nach dieser Ausbildungsstufe ohne Probleme mit marktüblichen Geräten und mit technischen Daten, die der Wirklichkeit entsprechen, durchgeführt werden können.

# EP 0 391 397 B1

<u>Liste der Bauteile</u>

**numerisch**        **alphabetisch**

| numerisch | alphabetisch |
|---|---|
| Gerätewand 1 | Außenrohr 21 |
| Schrank 2 | Ausgangsöffnung 52 |
| Rädern 3 | Bohrung 31 |
| Gerätegestell 4 | Bohrung 32 |
| Wanne 5 | Bohrung 36 |
| Stütze 6 | Bohrung 37 |
| Stütze 7 | Bohrung 38 |
| Leisten 8 | Dichtkegel 26 |
| Hydraulikzylinder 9 | Dichtung 29 |
| Hydraulikzylinder 10 | Dichtung 30 |
| Wandfläche 11 | Drosselstrecke 40 |
| Wandfläche 12 | Druckanschlag 45 |
| Manometer 13 | Druckfeder 27 |
| Manometer 14 | Druckfedern 41 |
| Manometer 15 | Druckfedern 42 |
| Zylinderstange 16 | Eingangsöffnung 51 |
| Handhebel 17 | Einsatzrohr 24 |
| Gelenkdrehpunkt 18 | Elektroschalter 47 |
| Flüssigkeitstank 19 | Endstück 22 |
| Gerätefafelrückwand 20 | Endstück 23 |
| Außenrohr 21 | Endstück 33 |
| Endstück 22 | Federdruckstück 25 |
| Endstück 23 | Federteller 48 |
| Einsatzrohr 24 | Flüssigkeitstank 19 |
| Federdruckstück 25 | Gelenkdrehpunkt 18 |
| Dichtkegel 26 | Gerätefafelrückwand 20 |
| Druckfeder 27 | Gerätegestell 4 |
| Verstellspindel 28 | Gerätewand 1 |
| Dichtung 29 | Gewindespindel 50 |
| Dichtung 30 | Handhebel 17 |
| Bohrung 31 | Hydraulikzylinder 9 |
| Bohrung 32 | Hydraulikzylinder 10 |
| Endstück 33 | Kolben 39 |
| Schubstange 34 | Kolben 44 |
| Steuerschieber 35 | Kolben 46 |
| Bohrung 36 | Leisten 8 |
| Bohrung 37 | Manometer 13 |
| Bohrung 38 | Manometer 14 |
| Kolben 39 | Manometer 15 |
| Drosselstrecke 40 | Markierung 43 |
| Druckfedern 41 | Räder 3 |
| Druckfedern 42 | Schrank 2 |
| Markierung 43 | Schubstange 34 |
| Kolben 44 | Steuerschieber 35 |
| Druckanschlag 45 | Stütze 6 |
| Kolben 46 | Stütze 7 |
| Elektroschalter 47 | Verstellspindel 28 |
| Federteller 48 | Wandfläche 11 |
| Gewindespindel 50 | Wandfläche 12 |
| Eingangsöffnung 51 | Wanne 5 |
| Ausgangsöffnung 52 | Zylinderstange 16 |

**Patentansprüche**

1. Hydraulik-Baukastensystem für Unterrichts- und Experimentierzwecke, bestehend aus einer Vielzahl von Hydraulikelementen, welche in Form von Klarsichtgeräten als Hydraulikventil und/oder elektrohydraulisches Gerät oder Meßgerät und/oder Filter ausgebildet sind und zur Veranschaulichung ihrer jeweiligen Grundfunktion und Wirkungsweise und ihres Zusammenwirkens in einer hydraulischen Schaltung auf einer Gerätewand montierbar sind, dadurch gekennzeichnet, daß jedes Hydraulikelement ein durchsichtiges Außenrohr (21) aus Kunststoff aufweist, in dem zur Veranschaulichung der jeweiligen gerätetypischen Grundfunktion des Hydraulikelements nur die hierzu erforderlichen, aus Kunststoff oder nichtrostendem Metall bestehenden spezifischen Grundbauelemente des jeweiligen Hydraulikelements funktionsfähig angeordnet sind, wobei Endstücke (22,23) das Rohr abschließen und Bohrungen (31,32,36,37,38) in der Wandung des Außenrohres für die Ein- und Ausgänge an funktionsgerechten Orten des Außenrohres angeordnet sind.

2. Hydrauliksystem nach Anspruch 1, **dadurch gekennzeichnet, daß** die Außenrohre der verschiedenen Hydraulikelemente des Systems gleichlang, im Vergleich zu konventionellen Hydraulikelementen zur Veranschaulichung für die Ausbildung eine übergroße Nennweite aufweisen und die Endstücke gleichartig ausgebildet sind.

3. Hydrauliksystem nach Anspruch 1 oder 2, **dadurch gekennzeichnet, daß** das durchsichtige Außenrohr (21) eines Hydraulikelements mit einer lichtreflektierenden ebenen Fläche befestigt ist, welche ihrerseits Mittel zur Befestigung der Fläche an der Gerätewand (1) aufweist, wobei Bohrungen vorhanden sind, welche mit den Bohrungen für die Ventileingänge und Ventilausgänge in dem Außenrohr und der Gerätewand räumlich übereinstimmen.

4. Hydrauliksystem nach Anspruch 1, 2 oder 3, **dadurch gekennzeichnet, daß** die Leitungsverbindungen der Hydraulikelemente mittels Steckverbindungen und durchsichtigen Schläuchen erfolgen.

5. Hydrauliksystem nach Anspruch 1, 2, 3 oder 4, **dadurch gekennzeichnet, daß** als Hydraulikmittel präpariertes und gefärbtes Wasser verwendet wird.

6. Hydrauliksystem nach einem der voranstehenden Ansprüche, **dadurch gekennzeichnet, daß** das Endstück eines Hydraulikventils oder Hydraulikzylinders (9,10) in Achsrichtung des Außenrohres eine Bohrung zur Durchführung einer von Hand betätigbaren Zylinderstange (16) aufweist, welche gegenüber dem Rohrinnern mit Dichtungen versehen ist.

7. Hydrauliksystem nach einem der voranstehenden Ansprüche, **dadurch gekennzeichnet, daß** ein als Rückschlagventil ausgestaltetes Sperrventil zwischen den Endstücken (22, 33) des Außenrohres (21) ausgebildet ist und einen aus Kunststoff bestehenden Dichtkegel (26) aufweist, der mittels einer Druckfeder (27) gegen ein im Außenrohr (21) befindliches durchsichtiges, als Ventilsitz wirkendes Einsatzrohr (24) preßt.

8. Hydrauliksystem nach einem der voranstehenden Ansprüche, **dadurch gekennzeichnet, daß** ein als Drosselventil ausgebildetes Mengenventil zwischen den Enkstücken des Außenrohres (21) ausgebildet ist und einen aus Kunststoff bestehenden Dichtkegel (26) aufweist, der mittels einer von Hand betätigbaren Verstellspindel (28) axial beweglich ist und im Schließzustand gegen ein im Außenrohr (21) befindliches, als Ventilsitz wirkendes Einsatzrohr (24) preßt.

9. Hydrauliksystem nach einem der voranstehenden Ansprüche, **dadurch gekennzeichnet, daß** ein als Druckbegrenzungsventil ausgebildetes Druckventil zwischen den Endstücken (22,23) des Außenrohres (21) ausgebildet ist und einen aus Kunststoff bestehenden Dichtkegel (26) aufweist, der mittels einer Druckfeder (27) gegen ein im Außenrohr (21) befindliches, als Ventilsitz wirkendes Einsatzrohr (24) preßt, wobei zwischen der Druckfeder (27) und dem Endstück (23) ein von Hand mittels einer Verstellspindel (28) betätigbaren Federteller (25) angeordnet ist.

10. Hydrauliksystem nach einem der voranstehenden Ansprüche, **dadurch gekennzeichnet, daß** ein als 4/3-Wegeventil ausgebildetes Wegeventil zwischen den Endstücken (22 und 23) des Außenrohres (21) ausgebildet ist und eine durch das eine Endstück (23) geführte, von Hand betätigbare Schubstange (34) aufweist, welche auf den Steuerschieber (35), dem die entsprechenden Bohrungen (36,37,38) in dem Außenrohr (21) zugeordnet sind, einwirkbar ausgebildet ist.

7

**11.** Hydrauliksystem nach einem der voranstehenden Ansprüche, **dadurch gekennzeichnet, daß** ein als Volumenstrom-Meßgerät ausgebildetes Hydraulikgerät zwischen den Endstücken (22,23) des Außenrohres ausgebildet ist und einen zwischen zwei Druckfedern (41,42) gelagerten oder gegen eine Druckfeder wirkenden Kolben (39) mit einer Drosselstrecke (40) aufweist.

**12.** Hydrauliksystem nach einem der voranstehenden Ansprüche, **dadurch gekennzeichnet, daß** ein als Druck-Meßgerät ausgebildetes Hydraulikgerät zwischen den Endstücken (22,23) des Außenrohres ausgebildet ist, wobei sich an einem Endstück (22) ein Druckanschluß (45) befindet und ein Kolben (44) gegen eine Druckfeder (41) beweglich gelagert ist.

**13.** Hydrauliksystem nach einem der voranstehenden Ansprüche, **dadurch gekennzeichnet, daß** ein als elektrohydraulischer Druckschalter ausgebildetes Druckventil zwischen den Endstücken (22,23) des Außenrohres (21) ausgebildet ist und einen federbetätigbaren Kolben (46) aufweist, der mit einem elektrischen Schalter (47) zusammenwirkt.

**14.** Hydrauliksystem nach einem der voranstehenden Ansprüche, **dadurch gekennzeichnet, daß** die vertikal angeordnete Gerätewand (1) mit einem Hydrauliktank (19) in einer Auffangschale (5) angeordnet ist, wobei die Gerätewand (1) zur Aufnahme der Hydraulikventile auf einer Seite und der Anordnung der Leitungsverbindungen vorzugsweise auf der anderen Wandseite Befestigungsmittel und zur Durchführung der Ventilausgänge und Ventileingänge Durchbohrungen aufweist.

**Claims**

**1.** A hydraulic modular system for teaching and experimental purposes, consisting of a plurality of hydraulic elements, which are transparent devices such as a hydraulic valve and/or an electrohydraulic measuring instrument and/or filter that may be mounted on a device board so that their basic respective functions and operating modes and the way in which they co-operate in a hydraulic circuit may be viewed, characterised in that each hydraulic element has a transparent outer tube (21) made from a plastics material, in which the relevant specific basic hydraulic elements, made from a plastics or non-rust metal, are arranged in operating mode in such a way that the basic functions of the different types of hydraulic elements may be viewed, in which end pieces (22, 23) close off the tube and in which bores (31, 32, 36, 37, 38) are provided in the walling of the outer tube for the purpose as inlets and outlets at the relevant points of operation.

**2.** A hydraulic system in accordance with claim 1, characterised in that the outer tubes of the various hydraulic elements of the system are of an equal length, unlike hydraulic elements conventionally used for viewing purposes, in order to create a larger than average nominal width, the end pieces being similarly formed.

**3.** A hydraulic system in accordance with claim 1 or 2, characterised in that the transparent outer tube (21) of a hydraulic element is joined to a light-reflecting even surface which provides fling of the surface to the device board (1), which has bore holes coinciding with bore holes in the outer tube and the device board to provide inlets and outlets for the valves.

**4.** A hydraulic system in accordance with claim 1, 2, or 3, characterised in that the electrical contacts of the hydraulic elements are made by means of plugs and transparent hose couplings.

**5.** A hydraulic system in accordance with claim 1, 2, 3, or 4, characterised in that specially prepared coloured water is used as the hydraulic medium.

**6.** A hydraulic system in accordance with one of the above claims, characterised in that the end piece of a hydraulic valve or hydraulic cylinder (9, 10) has a bore hole axial to the outer tube for introducing a manually operated cylinder rod (16), which is provided with seals to close off the interior of the tube.

**7.** A hydraulic system in accordance with one of the above claims, characterised in that a closing off valve is provided, being a check valve between the end pieces (22, 23) of the outer tube (21) having a tapered seal (26) made from plastics material which pushes against a transparent tube (24) serving as a valve seat inside the outer tube (21) by means of a spring (27).

8. A hydraulic system in accordance with one of the above claims, characterised in that it has a volume control valve serving as a throttle valve between the end pieces of the outer tube (21), a tapered seal (26) made from plastics material, which may be moved axially by means of a manually operated adjustment spindle, and which pushes against a tube (24) acting as a valve seat inset in the outer tube (21) in the closed position.

9. A hydraulic system in accordance with one of the previous claims, characterised in that a pressure valve is provided as a means of limiting the pressure between the end pieces (22, 23) of the outer tube (21) having a tapered seal (26) made from a plastics material, which by means of a spring (27) pushes against a tube inset in the outer tube (21) serving as a valve seat, whereby a spring plate, manually operated by means of an adjusting rod (28) is arranged between the spring (27) and the end piece (23).

10. A hydraulic system in accordance with one of the previous claims, characterised in that a shuttle valve being a 4/3 shuttle valve is provided between the end pieces (22 and 23) of the outer tube (21) and a manually operated push rod (34) is provided through one end piece (23), this rod being designed to operate the slide (35) which is arranged over the corresponding bore holes (36, 37, 38) in the outer tube (21).

11. A hydraulic system in accordance with one of the previous claims, characterised in that a hydraulic instrument which is an instrument for measuring the volume of flow is provided between the end pieces (22, 23) of the outer tube, having a piston (39) with a throttle section (40) arranged between two springs (41, 42) or acting on one spring.

12. A hydraulic system in accordance with one of the previous claims, characterised in that a hydraulic instrument which is an instrument for measuring pressure is provided between the end pieces (22, 23) of the outer tube, whereby a pressure connector (45) is arranged on one end piece (22) and a movable piston (44) is arranged against a spring (41).

13. A hydraulic system in accordance with one of the previous claims, characterised in that a pressure valve which is an electrohydraulic pressure switch is provided between the end pieces (22, 23) of the outer tube (21), having a spring-operated piston (47) which co-operates with an electric switch (47).

14. A hydraulic system in accordance with one of the previous claims, characterised in that the vertically positioned device board (1) is arranged in a collecting tray (5) with a hydraulic tank (19), whereby the device board (1) has fixing means by which the hydraulic valves may be held on one side and by which the current connectors may be arranged preferably on the other side of the wall and bores through which the valve outlets and inlets may be passed.

**Revendications**

1. Système hydraulique modulaire pour l'enseignement et l'expérimentation, constitué d'un pluralité d'éléments hydrauliques qui sont configurés sous la forme d'appareils transparents, comme vanne hydraulique et/ou appareil électro-hydraulique ou appareil de mesure et/ou filtre, et qui peuvent être montés sur un tableau d'appareils en vue d'illustrer la fonction fondamentale et le mode de fonctionnement de chacun d'eux et leur coopération dans un circuit hydraulique, caractérisé en ce que chaque élément hydraulique présente un tube extérieur transparent (21) en matière plastique dans lequel, en vue de l'illustration de la fonction fondamentale respective, typique à l'appareil, de l'élément hydraulique, sont seuls disposés, de manière à pouvoir fonctionner, les éléments constructifs de base spécifiques de chaque élément hydraulique, réalisés en matière plastique ou en métal résistant à la corrosion, des pièces d'extrémité (22, 23) refermant le tube, et des alésages (31, 32, 36, 37, 38) pour les entrées et les sorties étant prévus dans la paroi du tube extérieur, en des emplacements fonctionnels du tube extérieur.

2. Système hydraulique selon la revendication 1, caractérisé en ce que les tubes extérieurs des différents éléments hydrauliques du système sont de même longueur, présentent, pour l'illustration, une section nominale exagérée pour la configuration, par rapport à des éléments hydrauliques classiques, et les pièces d'extrémité sont configurées de manière semblable.

3. Système hydraulique selon la revendication 1 ou 2, caractérisé en ce que le tube extérieur (21) transparent d'un élément hydraulique est fixé par une surface plane réfléchissant la lumière, qui de son côté présente des moyens en vue de la fixation de la surface sur le tableau d'appareils (1), tandis qu'il est prévu des alésages dont les emplacements correspondent aux alésages prévus dans le tube extérieur et le tableau d'appareils pour les entrées de vannes et les sorties de vannes.

4. Système hydraulique selon la revendication 1, 2 ou 3, caractérisé en ce que les conduites de liaison des éléments hydrauliques sont réalisées par des liaisons enfichables et des tuyaux flexibles transparents.

5. Système hydraulique selon la revendication 1, 2, 3 ou 4, caractérisé en ce que l'on utilise comme fluide hydraulique de l'eau préparée et colorée.

6. Système hydraulique selon l'une des revendications précédentes, caractérisé en ce que la pièce d'extrémité d'une vanne hydraulique ou d'un cylindre hydraulique (9, 10) présente, dans la direction axiale du tube extérieur, un alésage de passage d'une tige de cylindre (16) actionnée à la main, qui est dotée de joints d'étanchéité par rapport à l'intérieur du tube.

7. Système hydraulique selon l'une des revendications précédentes, caractérisé en ce qu'un clapet de blocage, présentant la forme d'un clapet anti-retour, est forme entre les pièces d'extrémité (22, 23) du tube extérieur (21), et présente une bague bicône en matière plastique pressée au moyen d'un ressort de compression (27) contre un tube de garniture (24) transparent situé dans le tube extérieur (21) et configure comme siège de vanne.

8. Système hydraulique selon l'une des revendications précédentes, caractérisé en ce qu'un régulateur de débit configure comme clapet d'étranglement est formé entre les pièces d'extrémité du tube extérieur (21), et présente une bague bicône (26) en matière plastique, qui est mobile axialement au moyen d'une tige de réglage (28) actionnée à la main, et pressée en position de fermeture contre un tube de garniture (24) situé dans le tube extérieur (21), configuré comme siège de vanne.

9. Système hydraulique selon l'une des revendications précédentes, caractérisé en ce qu'un clapet de refoulement configuré comme clapet limiteur de pression est formé entre les pièces d'extrémité (22, 23) du tube extérieur (21), et présente une bague bicône (26) en matière plastique, pressée au moyen d'un ressort de compression (27) contre un tube de garniture (24) situé dans le tube extérieur (21) et configuré comme siège de vanne, tandis qu'entre le ressort de compression (27) et la pièce d'extrémité (23) est disposée une cuvette de ressort (25) actionnée à la main au moyen d'une tige de réglage (28).

10. Système hydraulique selon l'une des revendications précédentes, caractérisé en ce qu'un distributeur configuré comme distributeur à 4/3 voies est formé entre les pièces d'extrémité (22 et 23) du tube extérieur (21) et présente une tige de poussée (34) actionnée à la main et traversant une (23) des pièces d'extrémité, qui est configurée de manière à agir sur le registre de commande (35) auquel sont associés les alésages (36, 37, 38) correspondants du tube extérieur (21).

11. Système hydraulique selon l'une des revendications précédentes, caractérisé en ce qu'un appareil hydraulique configuré comme appareil de mesure du débit volumique est formé entre les pièces d'extrémité (22, 23) du tube extérieur, et présente un piston (39) comportant un étranglement (40), monté entre deux ressorts de compression (41, 42) ou agissant en opposition à un ressort.

12. Système hydraulique selon l'une des revendications précédentes, caractérisé en ce qu'un appareil hydraulique configuré comme appareil de mesure de pression est formé entre les pièces d'extrémité (22, 23) du tube extérieur, un raccord pour une source de pression (45) étant situé à une pièce d'extrémité (22), et un piston (44) étant monté à déplacement en opposition à un ressort de compression (41).

13. Système hydraulique selon l'une des revendications précédentes, caractérisé en ce qu'un clapet de refoulement configuré comme commutateur électro-hydraulique de pression est formé entre les pièces d'extrémité (22, 23) du tube extérieur (21), et présente un piston (46) actionné par ressort et coopérant avec un commutateur électrique (47).

**14.** Système hydraulique selon l'une des revendications précédentes, caractérisé en ce que le tableau d'appareils (1) disposé verticalement est placée avec un réservoir hydraulique (19) dans un réservoir de collecte (5), le tableau d'appareils (1) présentant des moyens de fixation, pour la réception des clapets hydrauliques d'un côté et pour l'agencement des conduites de liaison, de préférence de l'autre côté, et des alésages pour la traversée des sorties de vannes et des entrées de vannes.

# Fig.1

# Fig.2

EP 0 391 397 B1

Fig.3

21 22 23 24 25 26 27 28 29 30 31 32

Fig.4

# Fig.5

EP 0 391 397 B1

Fig.6

16

Fig.7

# Fig.8

Fig.9

Fig.10